# EUROPEAN PATENT APPLICATION

(11) **EP 2 175 248 A1**
(43) Date of publication of application: **14.04.2010**
(21) Application number: 08827098.8
(22) Date of filing: 06.08.2008
(51) Int. Cl.: G01F 3/22, F23N 1/00

(54) **FLOW MEASURING DEVICE, COMMUNICATION SYSTEM, FLOW MEASURING METHOD, FLOW MEASURING PROGRAM, AND FLUID SUPPLY SYSTEM**

(30) Priority: 06.08.2007 JP 2007204328
(71) Applicant: Panasonic Corporation, Kadoma-shi Osaka 571-8501 (JP); The High Pressure Gas Safety Institute of Japan, Tokyo 105-8447 (JP)
(72) Inventor: NAKAMURA, Hirozumi, Chuo-ku, Osaka-shi, Osaka 540-6707 (JP); YOKOHATA, Mitsuo, Chuo-ku, Osaka-shi, Osaka 540-6707 (JP); MIYATA, Hajime, Chuo-ku, Osaka-shi, Osaka 540-6707 (JP); ITOU, Youichi, Chuo-ku, Osaka-shi, Osaka 540-6707 (JP)
(74) Representative: Schwabe - Sandmair - Marx
(86) International application number: PCT/JP2008/002135
(87) International publication number: WO 2009/019873

(57) **Abstract**

Behavior different from that at a normal time of operating an appliance is detected, and it is possible to discriminate an improper use state.

In a gas meter 100, an ultrasonic flow rate meter 104 measures a flow rate of gas flowing in a flow path 102. A new event detecting unit 108 detects unsteady behavior as a new event, which is different from that at the normal time of operating an appliance using a fluid and which has not occurred in a hitherto use circumstance in a use circumstance, by using a flow rate pattern of the measured flow rate. Accordingly, it is possible to discriminate an improper use state such as ignition failure and breakdown. A transmission/reception unit 110 transmits a new event signal representing the new event of the unsteady behavior detected by the new event detecting unit 108, to a center apparatus 200 through a network 300.

## Description

### Technical Field

The present invention relates to a technique of detecting whether there is any variation in circumstances where a fluid is used by detecting variation in a flow rate of the fluid and notifying the outside.

### Background Art

There is a system which detects an accurate flow rate by detecting variation in flow rate of gas flowing in a gas flow path for each appliance which is performed by sequentially obtaining information on use patterns of new appliances appearing on the market even after a gas flow rate measuring apparatus has been produced(see Patent Document 1).

In the system, flow rate measuring apparatuses provided in homes are connected to a service center through communication lines. When new gas appliances appear on the market, the contents of databases of the gas appliances are updated by the service center and the stored contents of database storage means of the flow rate measuring apparatuses are updated through communication means. Accordingly, even when new gas appliances are introduced into homes, it is always possible to accurately discriminate the appliances.

A gas appliance monitoring apparatus is proposed in which breakdown based on the life span of the appliance or an inspection period is predicted by detecting variation in flow rate pattern at the time of ignition, to notify the outside of breakdown occurrence based on the life span of the appliance or the approaching inspection period. According to the apparatus, it is possible to prevent the breakdown from occurring based on the life span of appliances (see Patent Document 2).
Patent Document 1: JP-A-2007-24753
Patent Document 2: JP-A-10-238772

### Disclosure of Invention

### Technical Problem

In the example of Patent Document 1, appliances are discriminated according to flow rate patterns in a normal use state, but an improper use state such as breakdown of the appliances is not detected. In the example of Patent Document 2, variation in flow rate pattern with the elapsing of time such as variation in ignition time or rising edge time and variation in ignition flow rate or operating flow rate is detected, the life span assumed at the time of normal use is predicted, and unsteady behavior or the like, which is not assumed, can be detected.

The invention has been made to solve the above-described problem, and an object of the invention is to detect behavior different from that at a steady state of operating an appliance and to be capable of discriminate an improper use state.

### Technical Solution

A flow rate measuring apparatus of the invention includes a flow rate measuring unit that measures a flow rate of a fluid flowing in a flow path, a new event detecting unit that detects an unsteady behavior as a new event, which is different from that at a steady state of operating an appliance using a fluid and which has not occurred in a hitherto use circumstance, by using the flow rate measured by the flow rate measuring unit, and a transmission unit that transmits a new event signal representing the new event of the unsteady behavior detected by the new event detecting unit, to an external reception apparatus.

According to the invention, behavior different from that at the steady state of operating an appliance is detected, and it is possible to discriminate an improper use state such as ignition failure and breakdown.

The new event detecting unit may detect the unsteady behavior on the basis of an unsteady flow rate pattern of the flow rate. The new event detecting unit may detect the unsteady behavior on the basis of the number of occurrence times or occurrence frequency of an unsteady flow rate pattern of the flow rate. The new event detecting unit may detect the unsteady behavior on the basis of characteristics of an unsteady flow rate pattern and the number of occurrence times or occurrence frequency of the unsteady flow rate pattern. The new event detecting unit may use a pattern at the time of ignition failure as the unsteady flow rate pattern. The new event detecting unit may detect the unsteady behavior on the basis of a combination of a steady flow rate pattern and an unsteady flow rate pattern of the flow rate.

With such a configuration, the unsteady behavior is detected using the unsteady flow pattern at the time of operating the appliance, and it is possible to discriminate the improper use state.

According to the invention, a communication system is configured by connecting any one of the flow rate measuring apparatuses to the reception apparatus through a network.

According to the invention, there is provided a flow rate measuring method including the steps of measuring a flow rate of a fluid flowing in a flow path, detecting an unsteady behavior as a new event, which is different from that at a steady state of operating an appliance using a fluid and which has not occurred in a hitherto use circumstance, by using the measured flow rate, and transmitting a new event signal representing the new event of the unsteady behavior, to an external apparatus. The invention includes a flow rate measuring program for prompting a computer controlling the flow rate measuring apparatus to execute the steps. The invention includes a fluid supply system using the flow rate measuring apparatus, the communication system, the flow rate measuring method, or the flow rate measuring program.

### Advantage of the Invention

According to the invention, the behavior different from that at the steady state of operating the appliance is detected, and it is possible to discriminate the improper use state.

### Brief Description of Drawings

[Fig. 1] Fig. 1 is a block diagram illustrating a gas supply system including a gas meter according to an embodiment.
[Fig. 2] Fig. 2 is a graph illustrating flow rate patterns when steady flow rate patterns and unsteady flow rate patterns are repeatedly generated.
[Fig. 3] Fig. 3 is a graph illustrating, in detail, the flow rate patterns of the steady flow rate pattern and the unsteady flow rate pattern.
[Fig. 4] Fig. 4 is a graph illustrating flow rate patterns when steady flow rate patterns and unsteady flow rate patterns are repeatedly generated and the unsteady flow rate patterns are increased with the elapsing of time.
[Fig. 5] Fig. 5 is a graph illustrating flow rate patterns when unsteady flow rate patterns are repeated so that steady flow rate patterns are not generated.

### Explanation of References

- 13,14, 15:: GAS APPLIANCE
- 19:: GAS PIPELINE
- 100:: GAS METER (FLOW RATE MEASURING APPARATUS)
- 102:: FLOW PATH
- 104:: ULTRASONIC FLOW METER (FLOW RATE MEASURING UNIT)
- 106:: MEASUREMENT FLOW RATE INFORMATION STORING UNIT
- 108:: NEW EVENT DETECTING UNIT
- 110:: TRANSMISSION/RECEPTION UNIT
- 116:: APPLIANCE DISCRIMINATING UNIT
- 118:: APPLIANCE FLOW RATE HISTORY INFORMATION STORING UNIT
- 122:: FLOW PATH CUTOFF VALVE
- 200:: CENTER APPARATUS
- 300:: NETWORK
- 400:: CO SENSOR

### Best Mode for Carrying Out the Invention

Hereinafter, embodiments of the invention will be described with reference to the drawings.

### (Overall Configuration)

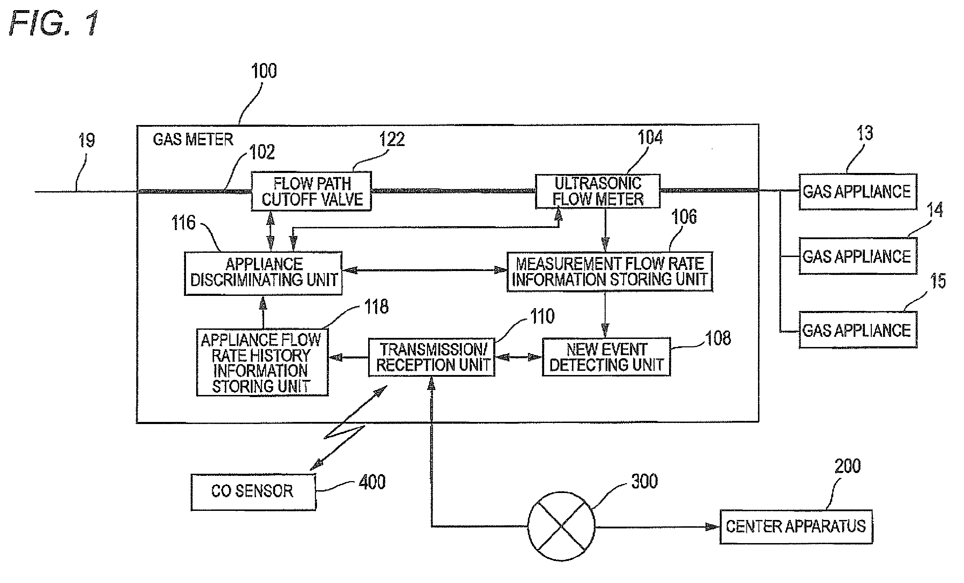

Fig. 1 shows a block diagram of a fluid supply system including a gas meter 100 as a flow rate measuring apparatus according to the embodiment, a center apparatus 200, a network 300, and a CO sensor 400. The gas meter 100 and the CO sensor are installed in a building, and they can communicate with each other, for example, by wired or wireless communication. The center apparatus 200 is provided in a gas company, a gas supplier, or a management department of a company or the like related to them, is an apparatus for centrally managing the gas meter 100 installed in each building, and is connected to the gas meter 100 through a network 300 such as wiring, telephone lines, and the internet, so as to communicate through the network.

The gas meter 100 is provided with a flow path 102, an ultrasonic flow meter 104 as a flow rate measuring unit, a measurement flow rate information storing unit 106, a new event detecting unit 108, a transmission/reception unit 110, an appliance discriminating unit 116, and an appliance flow rate history information storing unit 118. The gas meter 100 is provided on the flow path 102, and includes a flow path cutoff valve 122 for cutting off gas in the case of an emergency.

The ultrasonic flow meter 104 releases an ultrasonic wave to gas as a fluid flowing in the flow path 102 at a predetermined time interval (e.g., 2 seconds) to measure the flow rate, and a typical ultrasonic flow meter may be used. The measurement flow rate information storing unit 106 stores target data (flow rate pattern) in which the measurement flow rate value measured by the ultrasonic flow meter 104 and the measurement time when the measurement flow rate value is measured are associated and described.

When there is a new event, which has not occurred in previous use circumstance in a use circumstance of the gas meter 100, the new event detecting unit 108 detects such an event which has not occurred in the former appliance by comparing it with the event occurring by the former appliance in the appliance discriminating unit 116 and generates a new event signal representing the new event. Particularly, in the invention, unsteady behavior which is different from steady behavior at the steady state of operating an appliance is detected as the new event, and thus it is possible to discriminate the improper use state. The "improper use" means a use aspect different from normal use, such as abnormal operating at the time of breakdown of a gas appliance and improper operating by an operator. Such a new event signal is transmitted to an external monitoring apparatus, and thus it is possible to keep a proper use circumstance of a fluid.

The transmission/reception unit 110 transmits and receives various kinds of information to and from the other external apparatuses, and any of communication means and communication method is not limited irrespective of whether it is wired or wireless communication. The transmission/reception unit 110 serves as a transmission unit that transmitting the new event signal generated by the new event detecting unit 108 to the external apparatus such as the center apparatus 200 managed by the gas company, the gas supplier, or the like through the network 300 such as the wireless network or the internet.

The CO sensor 400 detects CO when CO (carbon monoxide) leaks from gas appliances 13 to 15, and transmits a CO detection signal representing the detection of CO to the transmission/reception unit (serving as a reception unit receiving the CO detection signal) 110 by wireless communication (or wired communication). Of course, a transmission/reception unit for the CO detection signal may be provided separately, and the signal may be transmitted to the transmission/reception unit 110, The transmission/reception unit 110 transmits the received CO detection signal to the new event detecting unit 108.

The appliance discriminating unit 116 discriminates gas appliances using gas as a fluid with reference to the flow rate patterns stored in the measurement flow rate information storing unit 106. In this case, the appliance discriminating unit 116 compares the flow rate patterns with gas appliance characteristic flow rate history information stored in advance in the appliance flow rate history information storing unit 118 for each gas appliance, and discriminates the gas appliances using gas from the similarities.

The gas meter 100 is connected to a gas pipeline 19 on the upstream side, and is connected to various gas appliances 13, 14, and 15 such as a gas table, a fan heater, and a floor heater on the downstream side.

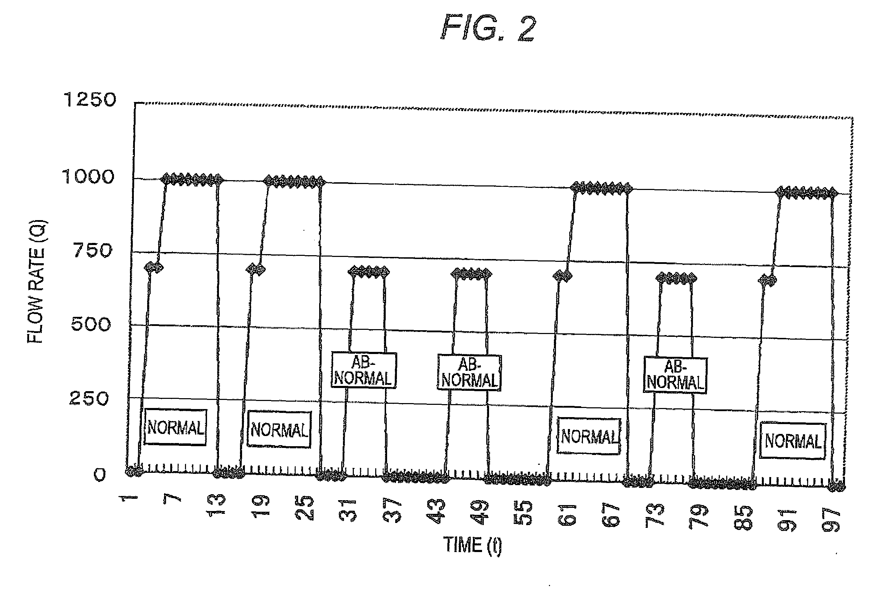

The gas meter 100 according to the embodiment detects that there is a new event, which has not occurred in the previous use circumstance in the use circumstance of the fluid, by using the flow rate pattern of the flow rate measured by the ultrasonic flow meter 104 that is the flow rate measuring unit, and notifies the external center apparatus 200. In the embodiment, as shown in the graph of Fig. 2 and the graphs below, the ultrasonic flow meter 104 measures flow rates (absolute flow rate) Q measured with a predetermined time interval (e.g., 2 seconds), the measured flow rates are stored in the measurement flow rate information storing unit 106, and the flow rate patterns are generated as shown in the graphs. The new event is detected on the basis of such generated flow rate patterns.

### (First Embodiment)

As described above, in the invention, the new event detecting unit 108 of the gas meter 100 detects the unsteady behavior on the basis of the unsteady flow rate pattern different from the steady flow rate pattern at the steady state of operating the appliance, it is detected as the unsteady behavior caused by the abnormal use, and thus it is possible to discriminate the improper use such as the initial defect, ignition failure, breakdown, or the like of the appliance. Particularly, the unsteady behavior of the flow rate pattern is detected as the unsteady behavior other than that which may occur at the time of normal use. In the first embodiment, a detection example of unsteady behavior when steady flow rate patterns (behavior of normal state) and unsteady flow rate patterns (behavior of abnormal state) are repeatedly generated.

Fig. 2 shows flow rate patterns when steady flow rate patterns and unsteady flow rate patterns are repeatedly generated in any one gas appliance of gas appliances 13, 14, and 15. Herein, a boiler is exemplified as the gas appliance. In the example of Fig. 2, an initial state of ignition failure of the gas appliance is shown, and several steady flow rate patterns of normal ignition and operation are shown, Then unsteady flow rate patterns considered as an abnormal state caused by ignition failure or the like, and then the steady flow rate patterns and the unsteady flow rate patterns repeatedly appear. In this case, as the unsteady behavior, unsteady flow rate patterns similar to each other are generated in a pulse shape clearly different from the steady flow rate patterns.

When such pulse-shaped flow rate patterns continue a plurality of times, the new event detecting unit 108 detects the unsteady behavior at this time and determines that a gas appliance is being abnormally used (ignition to gas is not normally performed, etc.). Accordingly, it is possible to recognize that there is the improper use state due to ignition failure or the like. To detect the unsteady behavior, the unsteady flow rate patterns different from the stored steady flow rate patterns of the appliances, such as the pulse-shaped flow patterns, are detected as the new event, and thus the unsteady behavior can be detected on the basis of the flow rate patterns considered as the abnormal state. The unsteady flow rate patterns include a pattern shape, a flow rate value, a continuation time, and the like, as characteristics of the flow rate patterns.

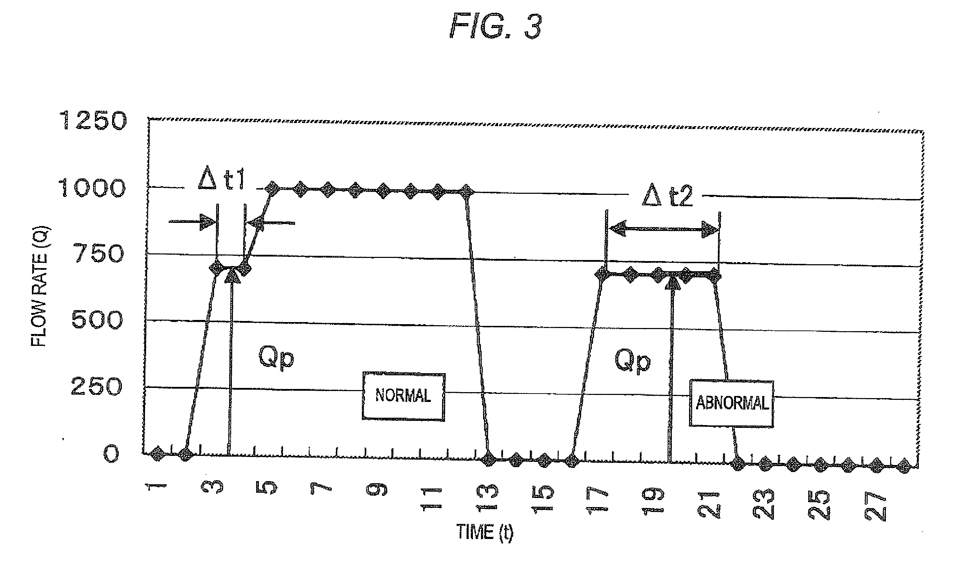

Fig. 3 shows the flow rate patterns of the steady flow rate pattern and the unsteady flow rate pattern, in detail. In the boiler, to perform a slow ignition point operation, in the case of normal operation as shown on the left side of Fig. 3, the flow rate is increased up to a predetermined flow rate Qp at the rising edge time of the appliance, then there is a period with little variation which is as long as a predetermined time Δt1, and then the flow rate is further increased to be the flow rate of the normal state. Meanwhile, when there is an abnormality due to ignition failure as shown on the right side of Fig. 3, the flow rate is increased up to the predetermined flow rate Qp, and then there is no increase in flow rate. The normal ignition is not performed, and the flow rate is decreased after a predetermined time Δt2 has elapsed. When there is the unsteady behavior due to the unsteady flow rate pattern described above, for example, the gas flow path is automatically closed to interrupt the gas after the predetermined time Δt2 has elapsed in the gas appliance. In this case, the flow rate pattern or the like at the time of ignition failure is detected as the unsteady flow rate pattern, and then the flow rate pattern is registered and can be used for the later detection of unsteady behavior.

When the unsteady behavior is detected, the new event detecting unit 108 generates a new event signal representing that there is a new event due to the unsteady behavior, and transmits the new event signal to the transmission/reception unit 110. The transmission/reception unit 110 transmits the new event signal to the center apparatus 200 through the network 300. The center apparatus 200 reports the new event signal to a management department by predetermined report means, and the management department interprets that there is a new event concerning improper use. The occurrence of the improper use is reported or an alarm thereof is given from the center apparatus 200 to a user's house, or an inspection of the gas meter or the gas appliance in the user's house is performed. Such a predetermined measure is taken, and thus it is possible to perform a safety process according to the situation. In this case, the center apparatus 200 serves as a reception apparatus receiving the new event signal, and a communication system including the gas meter 100 and the reception apparatus is configured.

According to the embodiment, by detecting the unsteady behavior, it is possible to discriminate the improper use such as initial defects, ignition failure, and the breakdown as the new event out of the range which normally occurs at the time of use, and thus it is possible to contribute to improvement of safety of the gas appliance. In this case, the abnormal use of the appliance can be appropriately detected, and thus it is easy to perform the replacing of appliances, the prevention of accidents and the like.

### (Second Embodiment)

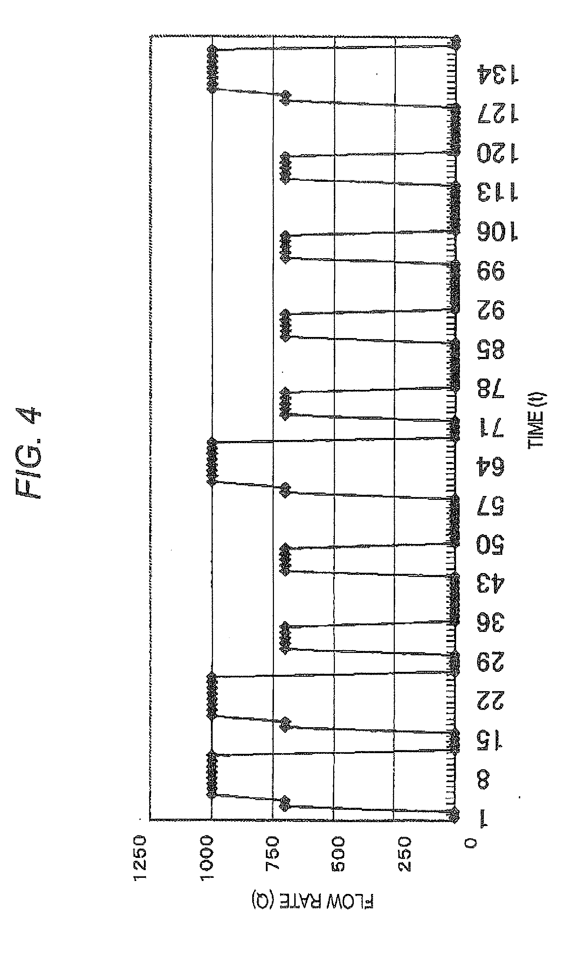

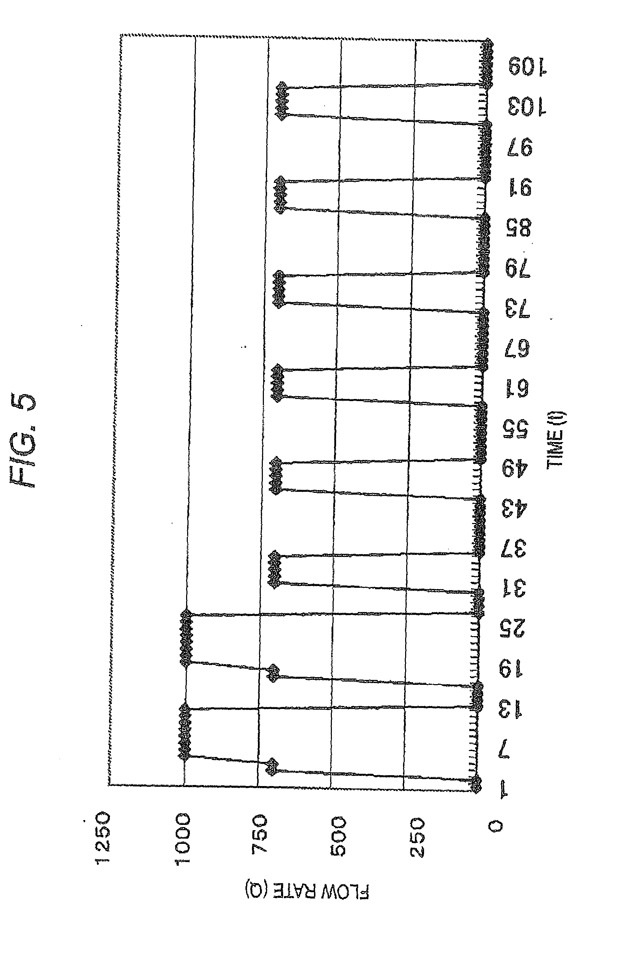

In the second embodiment, another example of unsteady flow rate patterns will be described, Fig. 4 shows flow rate patterns when steady flow rate patterns and unsteady flow rate patterns are repeatedly generated and the unsteady flow rate patterns are increased with the elapsing of time in any one gas appliance of the gas appliances 13, 14, and 15. Fig. 5 shows flow rate patterns when only unsteady flow rate patterns are repeated and steady flow rate patterns do not occur. In these cases, the boiler is exemplified as the gas appliance.

The example of Fig. 4 shows a case where the ignition failure proceeds from the example of Fig. 2, the steady flow rate patterns during normal operation and the unsteady flow rate patterns considered as the abnormal state caused by the ignition failure or the like both repeatedly appear, and the unsteady flow rate patterns are increased. The example of Fig. 5 shows a case where the ignition failure further proceeds from the example of Fig, 4, and the ignition fails by breakdown or the like. In this case, only the unsteady flow rate patterns considered as the abnormal state caused by the ignition failure or the like continuously appear.

In the embodiment, in the case of Fig. 4 or Fig. 5, the new event detecting unit 108 detects the unsteady behavior using the number of occurrence times or occurrence frequency based on an occurrence rate or the like of the unsteady flow rate patterns considered as the abnormal state. The number of occurrence times or the occurrence frequency and the characteristics of the flow rate pattern may be combined and used to detect the unsteady behavior. By using the number of occurrence times or the occurrence frequency of the flow rate patterns, it is also possible to detect a situation of the improper use such as an erroneous state of the gas appliance, or a degree thereof.

According to the embodiment, it is possible to discriminate the improper use such as ignition failure and breakdown as the event out of the range which normally occurs at the time of use by detecting the unsteady behavior, and it is possible to discriminate the situation of the improper use or the degree thereof by using the number of occurrence times or the occurrence frequency of the flow rate patterns at the abnormal time.

At the time of detecting the unsteady behavior, the unsteady behavior may be detected on the basis of a plurality of times of the unsteady flow rate patterns considered as the abnormal state. When the probability of erroneous detection is low, the unsteady behavior may be detected on the basis of one unsteady flow pattern. The steady flow rate patterns and the unsteady flow rate patterns may be combined and used to detect the unsteady behavior. By detecting the unsteady behavior on the basis of the plurality of flow rate patterns, it is possible to improve detection precision. When there is a sudden variation such as a great variation in flow rate in a short time, the unsteady behavior may be detected only by using one flow rate variation.

As described above, in the embodiments, the gas meter 100 detects the new event based on the unsteady behavior which is not normal and different from that at the time of the normal use of the gas appliance under the use circumstance of the fluid from the flow rate patterns of the fluid, and notifies the external center apparatus 200 through various means. By detecting the unsteady behavior, it is possible to discriminate the improper use state such as ignition failure and breakdown of the gas appliance, and thus it is possible to embody various safety measures.

To embody such a flow rate measuring method, a program for executing the steps of the flow rate measuring method of the invention is stored in the new event detecting unit 108 in the gas meter 100 or a computer (operation device) (not shown). The invention includes a fluid supply system including a supply source of a fluid (gas) using the flow rate measuring apparatus, the flow rate measuring method, and the program executed on the computer of the invention.

The case of using the ultrasonic flow meter has been described above, but it is obvious that the same advantage is obtained even using another momentary flow rate measuring apparatus.

The embodiments of the invention have been described above, the invention is not limited to the configurations described in the embodiments, and modifications and applications made by those sldlled in the art on the basis of the description of the specification and the known techniques are prescribed by the invention and included in the scope of requesting protection.

The invention has been described in detail and with reference to the specific embodiment, and it is obvious for a person skilled in the art to add various modifications or amendments without deviating from the intention and scope of the invention.
The present invention contains subject matter related to Japanese Patent Application (Japanese Patent Application No. 2007-204328) filed on August 6, 2007, the entire contents of which are incorporated herein by reference.

### Industrial Applicability

As described above, according to the invention, the behavior different from that at the steady state of operating the appliance is detected, there is an advantage that it is possible to discriminate the improper use state, and it is possible to appropriately cope with the new event under the use circumstance of the flow rate measuring apparatus. Accordingly, the invention is useful as the flow rate measuring apparatus, the communication system, the flow rate measuring method, the flow rate measuring program, and the fluid supply system, capable of discriminating the appliances on the basis of the flow rate information of the fluid flowing in the flow path of gas or the like.

## Claims

1. A flow rate measuring apparatus comprising:
a flow rate measuring unit that measures a flow rate of a fluid flowing in a flow path;
a new event detecting unit that detects an unsteady behavior as a new event, which is different from that at a steady state of operating an appliance using a fluid and which has not occurred in a hitherto use circumstance, by using the flow rate measured by the flow rate measuring unit; and
a transmission unit that transmits a new event signal representing the new event of the unsteady behavior detected by the new event detecting unit, to an external reception apparatus.

2. The flow rate measuring apparatus according to Claim 1, wherein the new event detecting unit detects the unsteady behavior on the basis of an unsteady flow rate pattern of the flow rate.

3. The flow rate measuring apparatus according to Claim 1, wherein the new event detecting unit detects the unsteady behavior on the basis of the number of occurrence times or occurrence frequency of an unsteady flow rate pattern of the flow rate.

4. The flow rate measuring apparatus according to Claim 1, wherein the new event detecting unit detects the unsteady behavior on the basis of characteristics of an unsteady flow rate pattern and the number of occurrence times or occurrence frequency of the unsteady flow rate pattern of the flow rate.

5. The flow rate measuring apparatus according to Claim 2, wherein the new event detecting unit uses a pattern at the time of ignition failure as the unsteady flow rate pattern.

6. The flow rate measuring apparatus according to Claim 1, wherein the new event detecting unit detects the unsteady behavior on the basis of a combination of a steady flow rate pattern and an unsteady flow rate pattern of the flow rate.

7. A communication system configured by connecting the flow rate measuring apparatus according to any one of Claims 1 to 6 to the reception apparatus through a network.

8. A flow rate measuring method comprising the steps of:
measuring a flow rate of a fluid flowing in a flow path;
detecting an unsteady behavior as a new event, which is different from that at a steady state of operating an appliance using a fluid and which has not occurred in a hitherto use circumstance, by using the measured flow rate; and
transmitting a new event signal representing the new event of the unsteady behavior, to an external apparatus.

9. A flow rate measuring program for prompting a computer controlling a flow rate measuring apparatus to execute the following steps:
measuring a flow rate of a fluid flowing in a flow path;
detecting an unsteady behavior as a new event, which is different from that at a steady state of operating an appliance using a fluid and which has not occurred in a hitherto use circumstance, by using the measured flow rate; and
transmitting a new event signal representing the new event of the unsteady behavior, to an external apparatus.

10. A fluid supply system using the flow rate measuring apparatus, the communication system, the flow rate measuring method, or the flow rate measuring program according to any one of Claims 1 to 9.
